# EUROPEAN PATENT APPLICATION

(11) **EP 1 177 736 A2**
(43) Date of publication of application: **06.02.2002**
(21) Application number: 01306154.4
(22) Date of filing: 17.07.2001
(51) Int. Cl.: A44C 5/10, A44C 5/00

(54) **Arm portable information apparatus**

(30) Priority: 31.07.2000 JP 2000231974
(71) Applicant: SEIKO INSTRUMENTS INC., Chiba-shi, Chiba 261 (JP)
(72) Inventor: Mitamura, Gen, c/o Seiko Instruments Inc., Chiba-shi, Chiba (JP)
(74) Representative: Sturt, Clifford Mark

(57) **Abstract**

To reduce costs and realize appropriate fitting while assuring an area of an electric circuit and an area of an operation portion, a display portion or the like. An arm portable information apparatus which is fit to the arm to be carried includes a main body having an electric circuit for information processing, a function unit having an electric circuit for an adding function, and a hinge portion for coupling the function unito the main body communicably and movably in the circumferential direction of the arm. Upon fitting, the hinge portion is bent with a proper angle, thereby enabling appropriate fitting.

## Description

The present invention relates to an arm portable information apparatus which is fit to the arm to be carried, and more specifically, to an arm portable information apparatus having various functions.

Recently, an arm portable information apparatus such as a watch has a high function and a multi-function. An arm portable information apparatus is provided in which a function for measuring the present location and a moving speed by a GPS (global positioning system), a function for downloading and managing data from a personal computer, etc are realized in a single body (main body of an arm portable information apparatus). To comply with a variety of user's necessities, many types of arm portable information apparatuses are prepared to have various functions or combination of functions. In accordance with the high function and multi-function of the arm portable information apparatus, an area of an electric circuit for information processing and for an adding function, and an area of an operation portion or a display portion are required to be increased. Therefore, an arm portable information apparatus for ensuring the area of the electric circuit and the area of the operation portion, display portion or the like by using a main body having a bent-shape in the circumferential direction of the arm is provided.

However, the above-mentioned techniques require many types of main bodies having various functions or combination of functions, and therefore, a problem in that costs increase arises. Since the main body having the bent-shape is used to ensure the area of the electric circuit and the area of the operation portion, display portion or the like, there is also a problem in that manufacture is difficult and costs increase. Further, there is a problem in that the arm portable information apparatus cannot be fit appropriately because the main body having the bent-shape is not necessarily suitable for the thickness of the user's arm.

The present invention is made in view of the above, and an object of the present invention is to provide an arm portable information apparatus capable of proper fitting with reduced costs while ensuring the area of the electric circuit and the area of the operation portion, display portion or the like.

According to the present invention, in an arm portable information apparatus which is fit to the arm to be carried comprises, a main body having an electric circuit for information processing (main body of the arm portable information apparatus), a function unit having an electric circuit for an adding function, and coupling means for communicably and movably communicating the function unit with the main body in a circumferential direction of the arm are provided. Upon fitting the apparatus to the arm, the main body and the function unit are communicably and movably coupled and arranged in the circumferential direction of the arm. Here, upon fitting, the function unit is not limited to one and two function units may be provided to be located at both ends of the main body in the circumferential direction of the arm.

A hinge is used as coupling means, a communication hole for communicating with an end surface on the main body side and an end surface on the function unit side through a rotational axis of the hinge is formed, and a communication cable communicates with the communication hole. Thus, communication between the main body and the function unit may be conducted. A non-through hole is provided in an axial direction from an engagement surface of the rotational axis of a joined hinge, and further, a through-hole, which communicates from the non-through hole to the end surface on the main body side or the end surface on the function unit side, is provided, thereby forming a communication hole which communicates with the end surface on the main body side and the end surface on the function unit side. The communication cable communicates with the communication hole and communication between the main body and the function unit may be performed.

Waterproof means is provided to a divided part of the rotational axis of the hinge and the inflow can be prevented. Also, ring-shaped waterproof means is provided to an entrance of the non-through hole, interference is provided to an outer diameter of the waterproof means and an inner diameter of the non-through hole, and the interference is provided to an inner diameter of the waterproof means and an outer diameter of the communication cable, thereby preventing inflow into the non-through hole. By providing interference in the rotational axis direction, the inflow to the non-through hole can be prevented.

Embodiments of the present invention will now be described by way of further example only and with reference to the accompanying drawings, in which:-
Fig. 1 is a perspective view showing the constitution of an arm portable information apparatus according to a first embodiment of the present invention;
Fig. 2 is a perspective view showing the constitution of the arm portable information apparatus according to the first embodiment;
Figs. 3A and 3B are a front view and a side view showing the constitution of a main body according to the first embodiment.;
Figs. 4A and 4B are a front view and a side view showing the constitution of a function unit according to the first embodiment;
Figs. 5B and 5B are a front view and a side view showing the constitution of coupling the main body to the function unit of the arm portable information apparatus according to the first embodiment;
Fig. 6 is a cross-sectional view showing one waterproof constitution of a hinge portion according to the first embodiment;
Fig. 7 is a cross-sectional view showing another waterproof constitution of the hinge portion according to the first embodiment;
Fig. 8 is a cross-sectional view showing still another waterproof constitution of the hinge portion according to the first embodiment;
Figs. 9A and 9B are a plan view and a side view showing the constitution of an arm portable information apparatus according to a second embodiment; and
Figs. 10A and 10B are a plan view and a side view showing the constitution of an arm portable information apparatus according to a third embodiment.

Hereinafter, embodiments of the present invention will be described in detail in order of a first embodiment and a second embodiment with reference to the accompanying drawings.

### First Embodiment

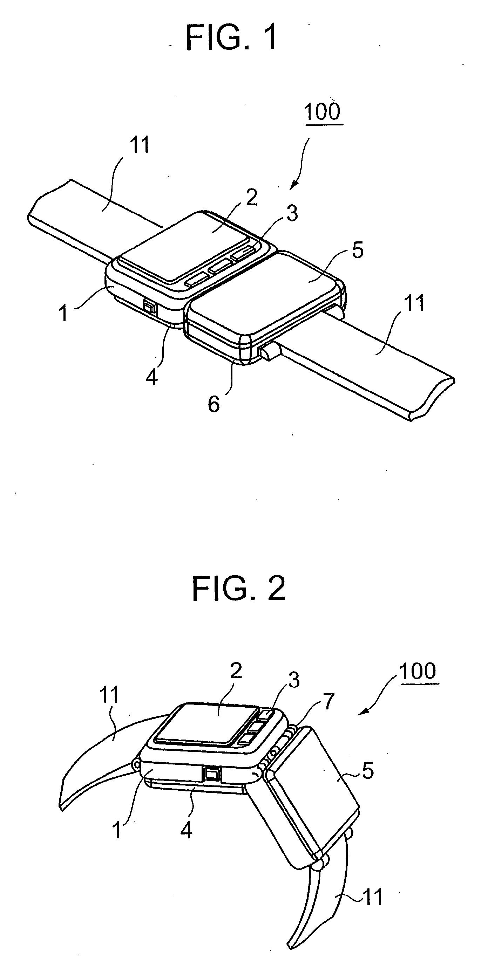

Figs. 1 and 2 are perspective views showing the constitution of an arm portable information apparatus according to a first embodiment of the present invention. An arm portable information apparatus 100 according to the first embodiment comprises: a main body 1 having an electric circuit (not shown) for information processing; a function unit 5 having an electric circuit (not shown) for an adding function; a hinge axis 7 for coupling the function unit 5 to the main body 1 communicably and movably in a circumferential direction of the arm; and a band 11 for fixing the arm portable information apparatus 100 to the arm.

The main body 1 has a display portion 2 for displaying various data and an input button 3 for inputting operation. The electric circuit of the main body 1 realizes fundamental functions such as a counter function, a stop watch function, and an alarm function. On the other hand, the electric circuit of the function unit 5 is a circuit for adding functions of a PHS (personal handyphone system) mobile, a GPS receiver, etc., and cooperates with the electric circuit of the main body 1, thereby realizing the functions. A button for input a telephone number, a GPS antenna, etc. are provided in the function unit 5 in accordance with the function to be realized.

The band 11 is provided to the opposite sides to the coupled sides by the hinge axis 7 of the main body 1 and function unit 5, and the main body 1 and the function unit 5 are fixed to the user's arm by mutual engagement. In this case, as shown in Fig. 2, the main body 1 and the function unit 5 are movably coupled by the hinge axis 7, thereby forming an angle corresponding to the thickness of the user's arm. That is, they can be appropriately fit irrespective of the thickness of the user's arm.

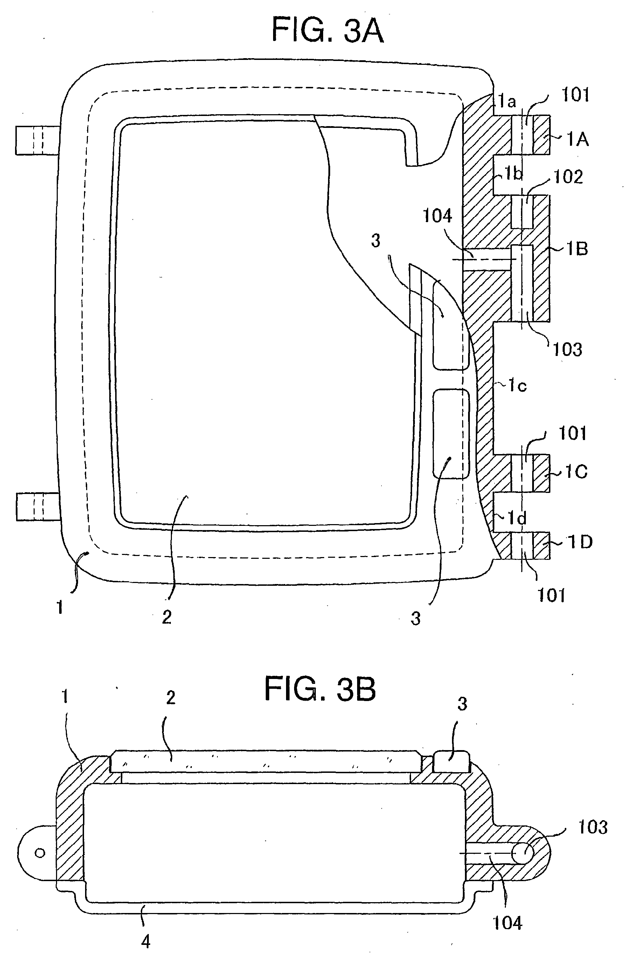

Figs. 3A and 3B are a front view and a side view showing the constitution of the main body 1 according to the first embodiment. Concave and convex portions 1a, 1b, 1c, 1d, 1A, 1B, 1C, and 1D constituting the hinge are provided to the main body 1 according to the first embodiment. The concave and convex portions 1a, 1b, 1c, 1d, 1A, 1B, 1C, and 1D of the main body 1 are joined and coupled movably to concave and convex portions 5A, 5B, 5C, 5D, 5a, 5b, 5c, and 5d of the function unit 5, by using the hinge axis 7, thereby constituting a hinge portion. A non-through hole 103 is provided to the convex portion 1B from an engagement surface with the convex portion 5C of the function unit 5 in the axial direction. Further, a through-hole 104 is provided in the main body side from the non-through hole 103. A through-hole 101 for inserting the hinge axis 7 is provided to the convex portions 1A, 1C, and 1D, and a non-through hole 102 for inserting the hinge axis 7 is provided to the opposite side of the non-through hole 103 of the convex portion 1B.

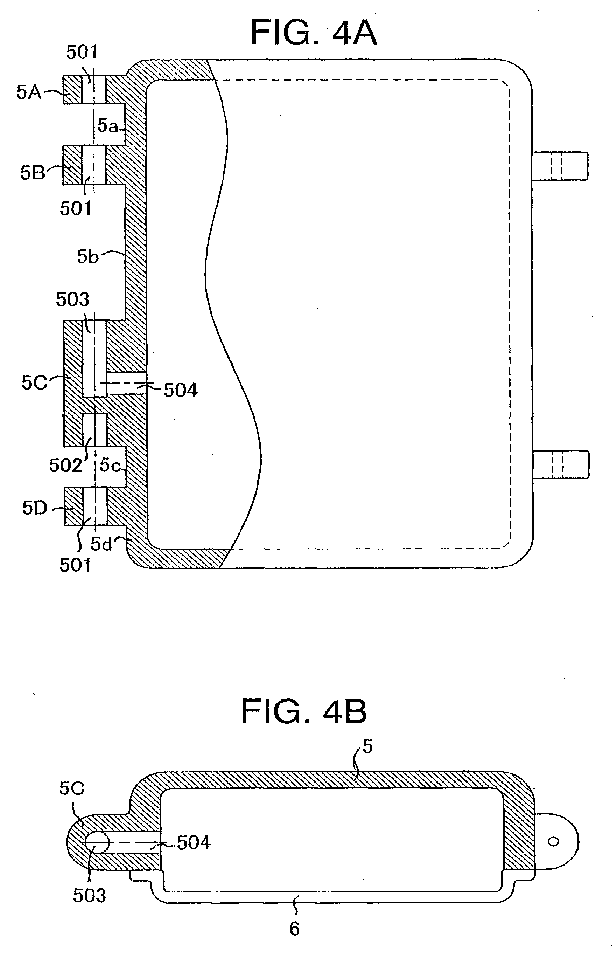

Figs. 4A and 4B are a front view and a side view showing the constitution of the function unit 5 according to the first embodiment. The concave and convex portions 5a, 5b, 5c, 5d, 5A, 5B, 5C, and 5D of the function unit 5 also have the same constitution of the concave and convex portions 1a, 1b, 1c, 1d, 1A, 1B, 1C, and 1D of the main body 1.

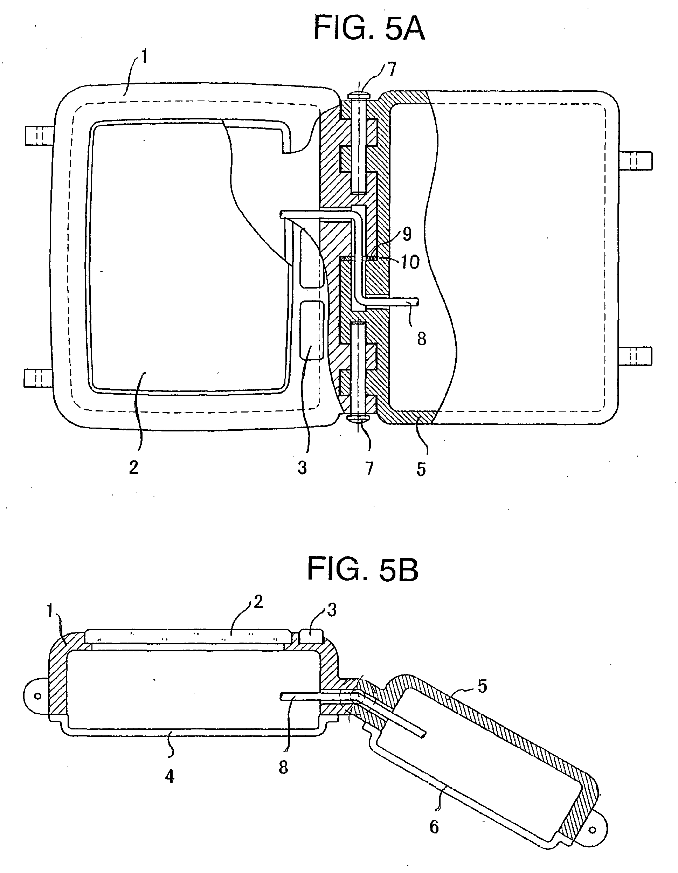

Figs. 5A and 5B are a front view and a side view showing the coupling constitution of the main body 1 and the function unit 5 according to the first embodiment. The concave and convex portions 1a, 1b, 1c, 1d, 1A, 1B, 1C, and 1D of the main body 1 are joined and movably coupled to the concave and convex portions 5A, 5B, 5C, 5D, 5a, 5b, 5c, and 5d of the function unit 5, by using the hinge axis 7. The non-through hole 103 of the convex portion 1B of the main body 1 is faced to a non-through hole 503 of the convex portion 5C of the function unit 5 at the same hinge axis, and a communication hole is formed through the through-hole 104, non-through holes 103 and 503 and through-hole 504 from the inside of the main body 1 to the inside of the function unit. A communication cable 8 such as an electric wire or an optical cable passes through the communication hole. By using the communication cable 8, communication between the electric circuit of the main body 1 and the electric circuit of the function unit 5 is performed.

Since the communication cable 8 passes through the center of the rotational axis of the hinge at the boundary between the main body 1 and the function unit 5, no tension and no compression force acts on the communication cable 8 if the main body 1 and the function unit 5 rotate with the axis. Although twist force acts on the communication cable 8, deformation of the communication cable is small and destroy due to fatigue and short-circuit are not caused because a rotational angle is equal to 90° or less. In the arm portable information apparatus, since it is fit to the arm and is used under a tough condition that it is struck against other objects, the protection of the communication cable becomes important. According to the first embodiment, the external appearance is improved and also the protection of the communication cable is possible because the communication cable is not seen from the outside.

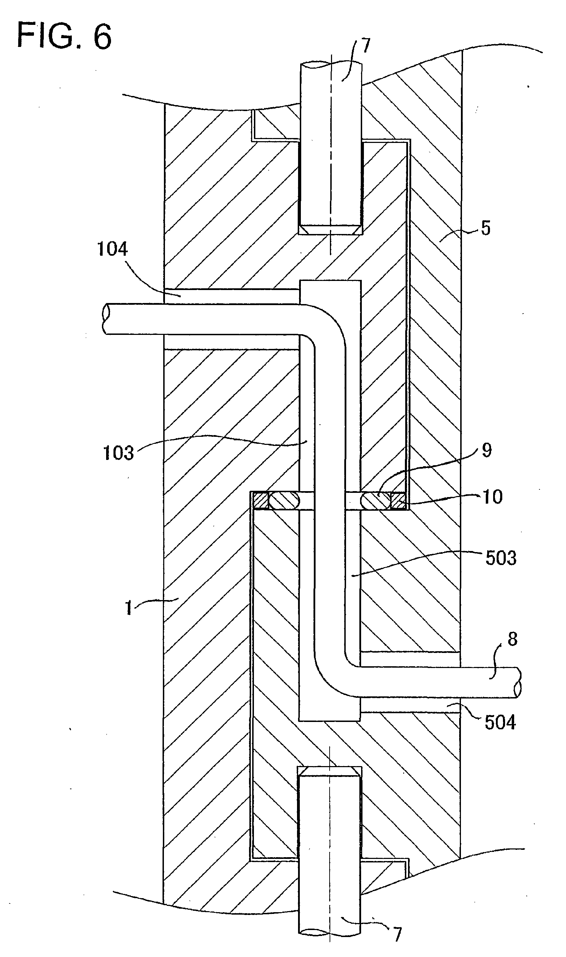

In the present invention, a ring-shaped grommet (O-ring) 9 for preventing inflow into the respective non-through holes 103 and 503 of the main body 1 and the function unit 5 is provided at the boundary between the main body 1 and the function unit 5. Fig. 6 is a partial cross-sectional view showing one waterproof constitution of the hinge portion according to the first embodiment. At the hinge portion, the O-ring 9 provided at the entrances of the non-through holes 103 and 503 through the communication cable 8 is provided with interference in the rotational axis direction and prevents the inflow into the non-through holes 103 and 503. A collar 10 for limiting the deviation of the O-ring is provided at the outer periphery of the O-ring 9. The collar 10 can be integrated around the non-through holes 103 and 503 of the main body 1 and the function unit 5 although the collar 10 is provided because of the easiness of manufacture in this embodiment.

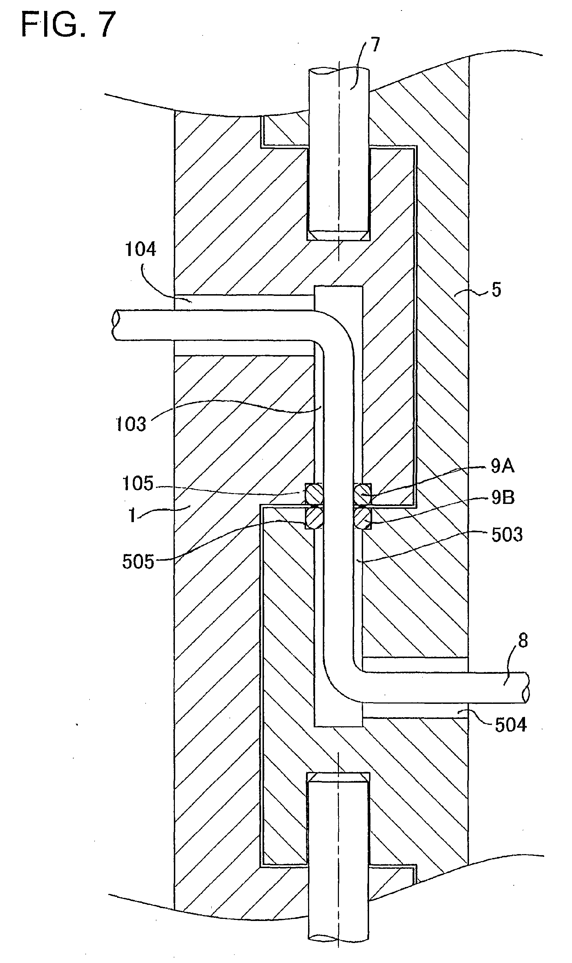

Fig. 7 is a partial cross-sectional view showing another waterproof constitution of the hinge portion according to the first embodiment. In this example, ring grooves 105 and 505 having diameters wider than those of the non-through holes 103 and 503 are provided to entrances of the respective non-through holes 103 and 503 of the main body 1 and the function unit 5, and O-rings 9A and 9B are provided to the ring grooves 105 and 505. By providing interference to the outer diameters of the O-rings 9A and 9B and the inner diameters of the ring grooves 105 and 505 and also by providing interference to the inner diameters of the O-rings 9A and 9B and the outer diameter of the communication cable 8, the inflow into the non-through holes 103 and 503 is prevented.

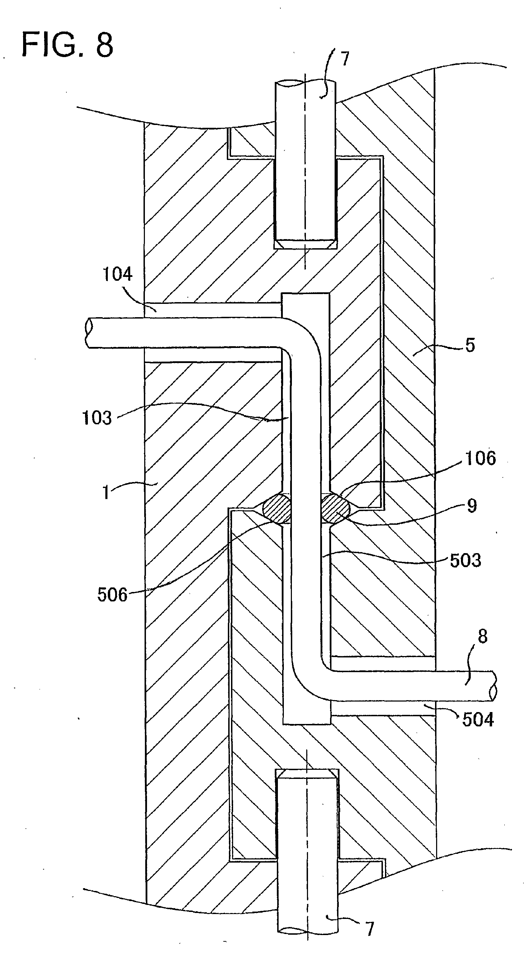

Fig. 8 is a partial cross-sectional view showing still another waterproof constitution of the hinge portion according to the first embodiment. In this example, slopes 106 and 506 are provided to the entrances of the respective non-through holes 103 and 503 of the main body 1 and the function unit 5. The O-ring 9 is disposed with interference at three portions of the slopes 106 and 506 and the outer diameter of the communication cable 8. Thus, the inflow into the non-through holes 103 and 503 is prevented.

With the above constitution, operation according to the first embodiment is described. The electric circuit of the main body 1 communicates with the electric circuit of the function unit 5 via the communication cable 8, and cooperates with the electric circuit of the function unit 5, thereby realizing an adding function corresponding to the function unit 5. For example, if the function unit 5 has an additional function of a PHS mobile, the main body 1 displays a telephone number and produces an incoming call sound. If the function unit 5 has an additional function of a GPS receiver, the main body 1 displays the present location, a moving speed, a moving distance, etc.

As mentioned above, according to the first embodiment, the hinge axis 7 couples the function unit 5 to the main body 1 communicably and movably in the circumferential direction of the arm. Upon fitting to the arm, the hinge axis 7 is bent with a proper angle, and therefore, the arm portable information apparatus 100 can be appropriately fit to the user's arm even if the operation portion or the display portion, the electric circuit or the like has a wide area. Further, since the main body 1 and the function unit 5 are not integrated and have no largely-bent shape, processing is easy and costs can be decreased. Also, since the main body 1 and the function unit 5 are provided separately, it is unnecessary to provide the main body every function and costs can be further decreased.

### Second Embodiment

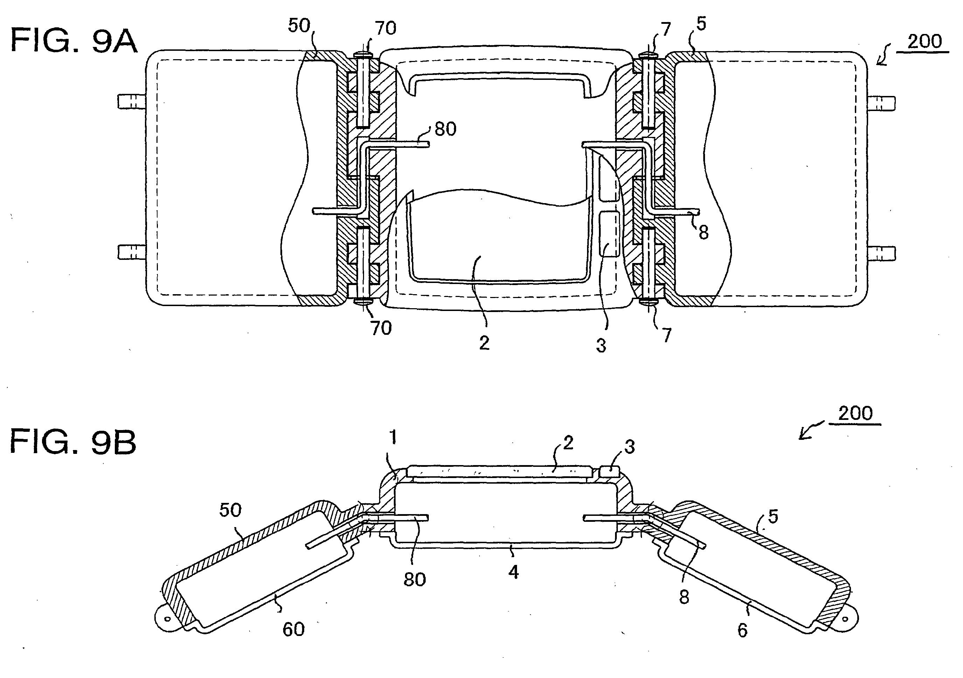

Figs. 9A and 9B are a plan view and a side view showing the constitution of an arm portable information apparatus according to a second embodiment of the present invention. Incidentally, the fundamental constitution is the same as that of the first embodiment, and therefore, the same reference symbols denote the same portions as those in Fig. 5. In an arm portable information apparatus 200 according to the second embodiment, the hinge portion 7 is provided at both ends of the main body 1 in the circumferential direction of the arm and two function units 5 are coupled to the main body 1. In other words, the two function units 5 are provided to be located at both the ends of the main body 1 in the circumferential direction of the arm.

As mentioned above, according to the second embodiment, the two function units 5 are provided to be located at both the ends of the main body 1 in the circumferential direction of the arm. Therefore, in addition to the effects of the first embodiment, it is further advantage that the combination of a plurality of functions can be realized with reduced costs.

### Third Embodiment

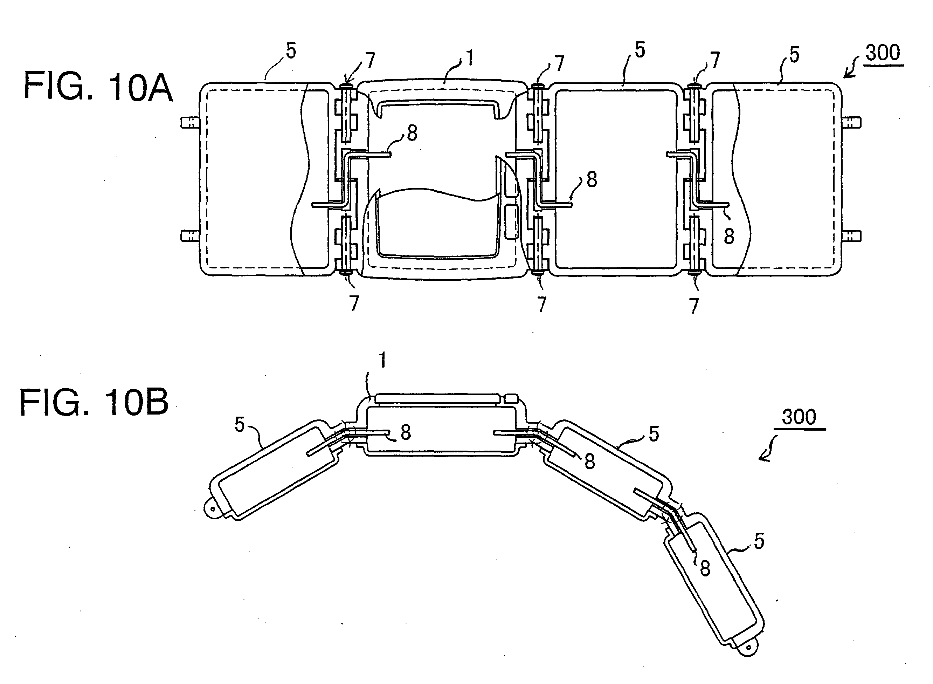

Figs. 10A and 10B are a plan view and a side view showing the constitution of an arm portable information apparatus according to a third embodiment of the present invention. In the first embodiment or second embodiment, the hinge axis 7 is further provided to the function unit 5 and the new function unit 5 may be connected. That is, a plurality of the function units 5 may be coupled to link them together. Other constitution and operation are similar to those of the first embodiment and the second embodiment, and therefore, the description is omitted.

As mentioned above, according to the third embodiment, at least two function units 5 are provided to be located at both ends of the main body 1 in the circumferential direction of the arm. Therefore, in addition to the effects of the first embodiment or second embodiment, it is further advantage that the combination of a plurality of functions can be realized with reduced costs.

As described above, in the arm portable information apparatus of the present invention, the coupling means couples the function unit communicably and movably to the main body in the circumferential direction of the arm. Thus, the apparatus can be appropriately fit to the thin arm and thick arm with reduced costs while the area of the electric circuit and the area of the operation portion, the display portion or the like is ensured.

In the arm portable information apparatus of the present invention, upon fitting, two function units are provided to be located at both ends of the main body in the circumferential direction of the arm. Thus, the combination of a plurality of functions can be realized with reduced costs.

In the arm portable information apparatus of the present invention, the coupling means is a hinge. The communication hole is formed to communicate with the end surface on the main body side and the end surface on the function unit side through the rotational axis of the hinge, and the communication cable communicates with the communication hole. Therefore, the main body can be coupled to the function unit communicably and movably while the communication cable is protected.

In the arm portable information apparatus of the present invention, the coupling means is a hinge, the non-through hole is provided in the axial direction from the engagement surface of the rotational axis, and the through-hole, which communicates from the non-through hole to the end surface on the main body side or to the end surface on the function unit side is provided, thereby forming the communication hole which communicates with the end surface on the main body side and the end surface on the function unit side. And by communicating the communication cable through the communication hole, the main body can be coupled to the function unit communicably and movably while the communication cable is protected.

In the arm portable information apparatus of the present invention, the communication cable has the waterproof means at the boundary on the boundary surface between the main body and the function unit. Thus, the main body and the function unit mutually rotate. However, waterproofing in the communication cable can be assured, and the apparatus can be used even in a situation where the communication cable might otherwise get wet with water.

In the arm portable information apparatus of the present invention, at least two function units 5 are provided to the main body in the circumferential direction of the arm. Therefore, in addition to the effects of the first embodiment, it is further advantage that the combination of a plurality of functions can be realized with reduced costs.

## Claims

1. An arm portable information apparatus comprising:
a main body having an electric circuit for information processing;
a function unit having an electric circuit for an adding function; and
coupling means for communicably and movably coupling the function unit with the main body in a circumferential direction of the arm;
wherein the arm portable information apparatus is fitted to an arm to be carried.

2. An arm portable information apparatus according to claim 1, wherein a number of the function units is two to be located at both ends of the main body in the circumferential direction of the arm upon fitting.

3. An arm portable information apparatus according to claim 1, wherein
the coupling means is a hinge,
a communication hole for communicating an end surface on the main body side and an end surface on the function unit side through a rotational axis of the hinge is formed, and
a communication cable passes through the communication hole.

4. An arm portable information apparatus according to claim 1, wherein the coupling means is a hinge, a non-through hole is provided in an axial direction from an engagement surface of a rotational axis of a joined hinge, a through-hole which communicates from the non-through hole to an end surface on the main body side or an end surface on the function unit side is provided, a communication hole which communicates with the end surface on the main body side and the end surface on the function unit side is formed , and a communication cable passes through the communication hole.

5. An arm portable information apparatus according to claim 3, wherein waterproof means is provided to a divided part of the rotational axis of the hinge.

6. An arm portable information apparatus according to claim 4, wherein waterproof means is provided to a divided part of the rotational axis of the hinge.

7. An arm portable information apparatus according to claim 4, further comprising:
ring-shaped waterproof means provided to an entrance of the non-through hole,
interference provided to an outer diameter of the waterproof means and to an inner diameter of the non-through hole, and
interference provided to an inter diameter of the waterproof means and to an outer diameter of the communication cable to prevent inflow into the non-through hole.

8. An arm portable information apparatus according to claim 4, further compring:
ring-shaped waterproof means provided to an entrance of the non-through hole, and
interference provided in the rotational axis direction to prevent inflow into the non-through hole.

9. An arm portable information apparatus according to claim 4, wherein at least two function units are coupled in the circumferential direction of the arm of the main body.
